# EUROPEAN PATENT SPECIFICATION

(11) **EP 4 198 083 B1**
(45) Date of publication and mention of the grant of the patent: **06.11.2024**
(21) Application number: 22213117.9
(22) Date of filing: 13.12.2022
(51) Int. Cl.: C08L 9/00, B60C 1/00, C08K 3/04

(54) **TIRE RUBBER REINFORCEMENT CONTAINING CARBON NANOTUBES**
REIFENGUMMIVERSTÄRKUNG MIT KOHLENSTOFFNANORÖHRCHEN
RENFORCEMENT DE CAOUTCHOUC POUR PNEUMATIQUE CONTENANT DES NANOTUBES DE CARBONE

(30) Priority: 20.12.2021 US 202163265704 P; 12.10.2022 US 202218045921
(43) Date of publication of application: 21.06.2023
(73) Proprietor: The Goodyear Tire & Rubber Company, Akron, OH 44316 (US)
(72) Inventor: DENNIS-PELCHER, Robert Vincent, Uniontown, 44685 (US); SCHMIDT, Ryan Michael, Wadsworth, 44281 (US); GOLDBERG, Matthew Adam, Munroe Falls, 44262 (US)
(74) Representative: Kutsch, Bernd

(56) References cited:
- EP-A1- 2 937 381
- EP-A1- 3 825 147
- WO-A1-2021/001156
- US-A1- 2015 299 437

## Description

### FIELD OF THE INVENTION

This invention relates to a tire having a rubber component, such as a tread, with nanofillers and methods of manufacturing same.

### BACKGROUND OF THE INVENTION

Tires with reduced rolling resistance are desirable for the improved fuel economy. Other desirable performance attributes for tires include reduced heat buildup in the tire tread during use to promote tire tread durability. To promote one or more of these desirable properties, the hysteretic property of the tire rubber is modified. Fillers in the tire composition are known to influence hysteresis of the rubber. For example, a reduction in hysteresis loss of tire rubber may be achieved by changing a proportion of reinforcing carbon black filler in the tire rubber. This modification may be achieved by replacement with other fillers, for example, an increase in precipitated silica filler content may balance the reduction in carbon black. These modifications ideally promote a reduction in the rubber's hysteresis losses.

There are problems, however, with filler modifications. Typically, these problems manifest themselves in tradeoffs between the desirable performance properties. Improvement in one attribute causes a lessening of one or more other beneficial attributes. As an example, a significant reduction in rubber reinforcing carbon black content of the tread rubber also produces a significant reduction in the thermal and electrical conductivity of the rubber. This is particularly apparent as the rubber reinforcing carbon black content falls below what is known as its percolation point. A tread rubber composition with reduced rubber reinforcing carbon black content but having substantial thermal conductivity and electrical conductivity for the tire tread rubber composition is desirable.

Carbon nanotubes are known to improve thermal and electrical conductivity of tire treads. There are, however, problems with use of carbon nanotubes in the tread rubber. For one, dispersion of carbon nanotubes during formulation and mixing of the composition is problematic. Poorly dispersed fillers can have potentially negative effects on tread performance and may prohibit inclusion of other components.

While current rubber compositions are commercially successful, there is a need to fabricate tire treads to achieve simultaneously high levels of durability, low heat buildup, and low rolling resistance to achieve more efficient energy use together with improved tire life in original and replacement tire treads.

### SUMMARY OF THE INVENTION

The invention relates to a tire in accordance with claim 1 and to a method in accordance with claim 12.

Dependent claims refer to preferred embodiments of the invention.

### BRIEF DESCRIPTION OF THE DRAWING

The accompanying drawings, which are incorporated in and constitute a part of this specification, illustrate embodiments of the invention and, together with detailed description given below, explain the invention.

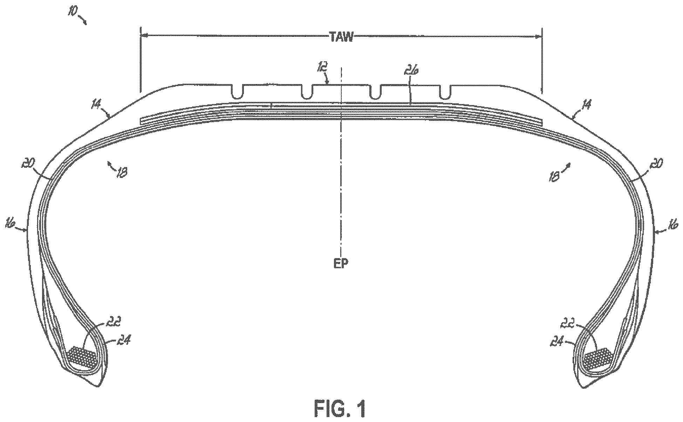

FIG. 1 is a cross-sectional view of a pneumatic tire in accordance with one embodiment of the invention.

### DETAILED DESCRIPTION OF PREFRERRED EMBODIMENTS OF THE INVENTION

In the description of this invention, the terms "rubber" and "elastomer" are used interchangeably, unless otherwise stated. In addition, the term "phr" refers to parts of a respective material per hundred parts by weight of rubber or elastomer.

"Pneumatic tire" refers to a laminated mechanical device of generally toroidal shape (usually an open-torus) having bead cores and a tread and made of rubber, chemicals, fabric, and steel, or other materials. When mounted on the wheel of a vehicle or aircraft or similar application, the tread provides traction, and the tire supports the vehicle load. "Carcass" means the tire structure apart from the belt structure, tread, undertread, and sidewall rubber over the plies, but including the bead cores. "Sidewall" refers to a portion of the outside surface of a tire between the tread and the bead. "Tread" refers to a molded rubber component which, when bonded to a tire casing, includes that portion of the tire that contacts the road when the tire is normally inflated and used under normal load.

"Axial" and "axially" refer to directions that are parallel to an axis of rotation of the tire. "Radial" and "radially" refer to directions toward or away from the axis of rotation of a tire. "Circumferential" or "circumferentially" refers to a portion of the tire at or near the farthest radial distance from the axis of rotation. "Equatorial Plane" (or "EP") refers to a plane perpendicular to the tire's axis of rotation and passing through the center of its tread.

The FIG. 1 shows a simplified cross-section of a pneumatic tire 10 that has an improved lifespan and capacity for retreading. The tire 10 includes tread portion 12 from which a pair of sidewalls 16 extend and are connected to the tread portion 12 by shoulder regions 14. The tread 12 is adapted to be ground contacting when the tire 10 is in use. The shoulder regions 14 extend predominantly axially outwardly from the tread portion 12. The sidewalls 16 extend predominantly radially inwardly from the shoulder regions 14.

A carcass 18 of the tire 10 includes one or more continuous radial plies 20 extending from side to side. One ply is shown in the FIG. 1. The carcass 18 is located radially inwardly from the tread portion 12 and axially inwardly from the sidewalls 16. The carcass 18 acts as a supporting structure for components located axially or radially outwardly including, for example, the tread portion 12 and sidewalls 16. The one or more radial plies 20 may comprise cords or reinforcing wires of, for example, steel, nylon, polyester, rayon, glass, etc., embedded in a rubber matrix. Carcass 18 of the tire has a pair of axially spaced bead wires 22 around which are wrapped the distal ends of the radial plies 20. The bead wires 22 may comprise, for example, substantially inextensible coils made of round metal filaments.

In one embodiment, the tire 10 further includes an optional inner liner (or air barrier layer) 24 disposed radially inwardly from the carcass 18. The optional rubber tire inner liner 24 may be any known rubber inner liner for use in pneumatic tires 10. In one example, the rubber inner liner 24 can be a non-butyl general purpose rubber (GPR) or a rubber composition disclosed herein. In another example, the rubber inner liner 24 can be a sulfur curative-containing halobutyl rubber composition of a halobutyl rubber such as for example chlorobutyl rubber or bromobutyl rubber. Such tire halobutyl rubber based inner liner layer may also contain one or more sulfur curable diene-based elastomers such as, for example, cis 1,4-polyisoprene natural rubber, cis 1,4-polybutadiene rubber and styrene/ butadiene rubber, or mixtures thereof. Rubber inner liner 24 is typically prepared by conventional calendaring or milling techniques such as to form a strip of uncured compounded rubber of appropriate width. When the tire 10 is cured, the rubber inner liner 24 becomes an integral, co-cured, part of the tire 10. Tire inner liners, like that of rubber inner liner 24, and their methods of preparation are well known to those having skill in such art.

With continued reference to the FIG. 1, the tire 10 further includes at least one fiber-reinforced rubber layer 26, which can be supported by the carcass 18 and interposed between the tread portion 12 and the carcass 18. The fiber-reinforced rubber layer 26 can define a barrier/barrier layer and includes a rubber compound that is reinforced with one or more types of fiber and has one or more chemical compounds that provide desirable barrier properties (e.g., abrasion resistance properties), thereby helping to prevent wear and/or tear from extending beyond the tire tread 12 and into its underlying layer(s), such as the carcass 18, and desirably increasing the overall lifespan of the tire 10.

In accordance with one embodiment of the invention, one or more portions of the tire 10 consist of or comprise a cured rubber of a rubber composition disclosed herein. By way of preferred example, the cured rubber forms the tread 12 and/or the sidewall 16 of the tire 10.

In one embodiment, the rubber composition includes 100 phr of an elastomer including at least one diene-based elastomer modified by one or more additives and in which one or more particulate fillers are dispersed. The fillers include carbon nanotubes, described below, and may include other particulate fillers. As such, the rubber composition may include a combination of fillers of different compositions and amounts. By way of example, the filler may include a mixture of particulates of carbon black, silica, and carbon nanotubes. In one embodiment, the filler consists of carbon black particulates, silica particulates, and carbon nanotubes and combinations thereof. In embodiments of the invention, the filler of the rubber composition is limited to a predetermined maximum amount. By way of example, the filler may not exceed 110 phr. By way of additional example, the filler may be present in a range of 31 phr to 110 phr. Advantageously, embodiments of the rubber composition may be utilized in larger tires, such as OTR tires, with improved tear and crack propagation resistance. Generally, embodiments of the rubber composition exhibit improved thermal conductivity. This improvement is believed to also improve cure times and cure efficiency.

More specifically, in embodiments of the invention, various rubbers, including mixtures thereof, can be used as the rubber component of the rubber composition. Various diene-based elastomers may be used for the rubber composition. For example, polymers and copolymers of at least one monomer comprised of at least one of isoprene and 1,3-butadiene and from styrene copolymerized with at least one of isoprene and 1,3-butadiene. Representative conjugated diene-based elastomers are, for example, at least one of cis 1,4-polyisoprene (natural and synthetic), cis 1,4-polybutadiene, styrene/butadiene copolymers (aqueous emulsion polymerization prepared and organic solvent solution polymerization prepared) (e.g., ESBR and SSBR, respectively), medium vinyl polybutadiene having a vinyl 1,2-content in a range of 15 to 90 percent, isoprene/butadiene copolymers, and styrene/isoprene/butadiene terpolymers or combinations of the above. By way of example only, an 80 phr to 20 phr ratio of natural rubber to ESBR may be utilized. Tin coupled elastomers may also be used, for example, tin coupled organic solution polymerization prepared styrene/butadiene co-polymers, isoprene/butadiene copolymers, styrene/isoprene copolymers, polybutadiene and styrene/isoprene/butadiene terpolymers. In one embodiment, the conjugated diene-based elastomer may be an elastomer, such as a styrene/butadiene copolymer containing at least one functional group reactive with hydroxyl groups on a precipitated silica. For example, the functional group may include at least one of siloxy, amine, imine, and thiol groups, for example, comprised of a siloxy and least one of amine and thiol groups.

In embodiments of the invention, the rubber composition includes carbon nanotubes in an amount of at least 1 phr up to 25 phr. In one embodiment, the carbon nanotubes are present at 6 phr or in a range of from 5 to 5 phr. Carbon nanotubes according to embodiments of the invention are generally parallel, multi-walled carbon nanotubes.

Preferably, the carbon nanotubes have a nested structure of from 3 walls to 15 walls.

Carbon nanotubes are very small diameter fibers with high aspect ratio. Individual fibers preferably have an average diameter in a range of from 1 nm to 40 nm and average diameters in a range from 5 nm to 30 nm or in a range from 15 nm to 30 nm. Individual fibers preferably have an average length of between 500 nm and 30,000 nm. In a preferred embodiment, the carbon nanotubes may have an average length less than 1,000 nm, for example, 900 nm. The length to diameter ratio of the carbon nanotubes is at least 20, meaning the length is at least 20 times greater than the diameter.

The carbon nanotubes may be produced from high purity, low molecular weight hydrocarbons in a continuous, gas phase, catalyzed reaction or by other means/methods. As produced, the carbon nanotubes may be intertwined together in agglomerates. These tangled agglomerates of carbon nanotubes may be untangled and/or dispersed prior to use. Preferably, one or more surfaces of the carbon nanotubes may be modified during or following their synthesis. In one embodiment, modification includes adding oxygen or oxygenated functional groups to the surface of the carbon nanotubes. This may be achieved by acid treating the carbon nanotubes so that they may be functionalized with OH and COOH groups. To that end, modification of the carbon nanotubes may include treatment in an oxygen-containing environment. Carbon of the nanotube atomic structure may bond with oxygen via a reaction with oxygen or an oxygen-containing reactant. The oxygen or oxygen-containing reactant may bond to the surface of the as-formed carbon nanotube or may diffuse into the structure of the tube wall. The amount of oxygen in the carbon nanotubes following modification ranges from 0.25 wt.% to 15 wt.% or from 1 wt.% to 10 wt.%. Usable carbon nanotubes are commercially available from Molecular Rebar Design, LLC of Austin, Texas as MRO Gen II in naphthenic oil.

Other fillers may be mixed with the rubber composition. By way of example, other fillers may include silica filler. This preferably includes precipitated silica particulates, and fumed (pyrogenic) silica particulates in which aggregates of precipitated silicas may be present. Silica is present in a measurable amount (e.g., at least 0.1 phr) but at most 10 phr. For example, from 0.5 phr to less than 10 phr. The silica may be synthetic, amorphous, and precipitated silica that is highly dispersible with a CTAB (i.e., ASTM D6845) of at least 250 m²/g.

Advantageously, silica content may be reduced and also uncoupled silica (i.e., no silane) can be used for improved tear strength in combination with carbon nanotubes.

Accordingly, the rubber composition used in the invention is preferably silane free.

Generally, tires with relatively high silica content (e.g., > 50 phr silica) are stiffer and so have a reduced rolling resistance imparted by the high silica content. In embodiments of the invention, silica content is relatively low, but rolling resistance is also relatively low and thermal conductivity is relatively high. This is a beneficial combination thought to be provided by inclusion of the carbon nanotubes. Thus, it is believed that this combination provides improved stiffness, maintains hysteresis, provides crack growth resistance, maintains bulk tear resistance, and improves abrasion resistance while also improving thermal conductivity.

If included, silica fillers may include aggregates obtained by the acidification of a soluble silicate, e.g., sodium silicate and may include co-precipitated silica and a minor amount of aluminum. The silica particles might usually be characterized, for example, by having a BET surface area, as measured using nitrogen gas, preferably in the range of 40 m² per gram to 600 m² per gram, and more usually in a range of 50 m² per gram to 300 m² per gram. The silica particles may also be characterized by having a dibutylphthalate (DBP) absorption value in a range of 50 cc/100 g to 400 cc/100 g, and more usually 100 to 300 cc/100 g (according to ASTM D2414). Various commercially available precipitated silicas usable, for example, include silicas from Solvay under the Premium SW brand; PPG Industries under the Hi-Sil trademark including Hi-Sil 210, Hi-Sil 243, and Agilon 400G-D; silicas sold under the marks Zeosil 1165MP and Zeosil 165GR from Rhodia; silicas from Degussa AG designated VN2 and VN3, as well as other grades of silica, particularly precipitated silicas, which can be used for elastomer reinforcement. Coupling agents may be used if desired to aid in coupling the silica (e.g., precipitated silica with hydroxyl groups on its surface).

In one embodiment, the rubber composition includes a resin in an amount from 0.1 phr up to 10 phr. An exemplary resin is a modified gum rosin with a softening point of 97°C and an acid number of 186. Other acceptable or additional resins that can be included are heat reactive hydrocarbon resins derived from the polymerization of the unsaturated constituents of the petroleum C9 fraction with softening points of 105°C, and mixtures of alkylated naphthenic and aromatic resins with softening points of 101°C.

In a preferred embodiment of the invention, the rubber composition includes two or more different resins in an amount from 0.1 phr up to 5 phr each.

Advantageously, the amount of resin in the rubber composition may be increased because the rubber composition has increased thermal conductivity. This relative operating temperature reduction permits higher amounts of resin which improves the tear resistance of the tire of the rubber composition. Generally, it is believed that higher loading of resin negatively effects compound hysteresis. However, the resin, depending on the type, may improve elongation and tensile properties and improve incorporation and dispersion of fillers.

The rubber composition may include antioxidants, for example in an amount from 1 to 5 phr. Representative antioxidants may be, for example, diphenyl-p-phenylenediamine and others or mixtures of those antioxidants, for example, those disclosed in The Vanderbilt Rubber Handbook (1978) at pages 344 through 346. Fatty acids may also be added to the rubber composition. These can include stearic acid and combinations of stearic acid with one or more of palmitic acid oleic acid and may comprise, for example, from 0.5 to 3 phr. Zinc oxide is also added to the rubber composition and may be present in an amount from 1 to 10 phr. Peptizers, where used, may be present in an amount from 0.1 to 1 phr.

In an exemplary embodiment, carbon black particulates are added to the rubber composition from 30 phr to 75 phr. By way of further example, the rubber composition may be from 40 phr to 65 phr carbon black. Embodiments of the invention have 110 phr or less of total filler loading, where total filler loading is the amount of carbon nanotubes, silica, carbon black, and other solid filler particulates added to the rubber composition during mixing and prior to curing. By way of additional examples, embodiments of the invention may have a total filler loading of between 31 phr and 110 phr and of between 90 phr to 95 phr.
In one embodiment of the invention, the rubber composition includes an oil, for example, in an amount from 1 phr to 10 phr. Oils can include, for example, aromatic, naphthenic, paraffinic oils, and/or vegetable oils. By way of example, the oil may be present in an amount of 4 phr and be included based on a dispersion of the carbon nanotubes. The dispersion of the carbon nanotubes of a given amount includes 40 wt.% oil.

Preferably, other than the oil from the dispersion of the carbon nanotubes, no other oils are included in the rubber composition.

In one embodiment, the rubber composition may include a wax. Typical amounts of wax are from 1 phr to 5 phr. Exemplary wax includes a microcrystalline wax and/or a refined paraffin wax.

Vulcanization is conducted in the presence of a sulfur-vulcanizing agent. The sulfur-vulcanizing agents may be used, for example, in an amount ranging from 0.5 to 4 phr. Examples of suitable sulfur-vulcanizing agents include elemental sulfur (free sulfur) or sulfur donating vulcanizing agents, for example, an amine disulfide, polymeric polysulfide, or sulfur olefin adducts.

Sulfur vulcanization accelerators may be used to control the time and/or temperature required for vulcanization and to improve the properties of the vulcanizate. In one embodiment, a single accelerator system may be used, i.e., primary accelerator. A primary accelerator may be added in total amounts ranging, for example, from 0.5 phr to 4 phr, and by way of additional example, from 0.8 phr to 1.5 phr. In one embodiment, a secondary accelerator may be used with the primary accelerator. The secondary accelerator may be added in smaller amounts than the primary accelerator, for example, from 0.05 to 3 phr. This may activate and improve the properties of the vulcanizate. The primary accelerator is a sulfenamide. If a secondary accelerator is used, the secondary accelerator may be, for example, a guanidine, dithiocarbamate or thiuram compound. In addition, delayed action accelerators may be used, for example, which are not affected by normal processing temperatures but produce a satisfactory cure at ordinary vulcanization temperatures. Vulcanization retarders might also be used, where desired or appropriate. Suitable types of accelerators include, for example, amines, disulfides, guanidines, thioureas, thiazoles, thiurams, sulfenamides, dithiocarbamates, and xanthates.

A dispersion of the carbon nanotubes is prepared prior to adding the dispersed carbon nanotubes to the rubber composition. A selected amount of the carbon nanotubes is added to a carrier. Surfaces of the carbon nanotubes are oxygenated to a preselected level prior to dispersion. One exemplary carrier is an oil disclosed above.

Embodiments of the rubber composition may be compounded by mixing the sulfur-vulcanizable constituent rubbers with additive materials including those described above and others. For example, curing aids, such as sulfur; activators; retarders and accelerators; processing additives, such as oils, resins including tackifying resins; plasticizers; pigments; fatty acids; zinc oxide; waxes; antioxidants; peptizing agents; and reinforcing fillers materials, for example, the carbon nanotubes, carbon black, and silica may be mixed together. By way of example only, an order of mixing includes adding the carbon nanotubes, a majority of the carbon black, and resins in a nonproductive mixing stage with silica and the remainder of the carbon black in a second nonproductive mixing stage.

## Claims

1. A pneumatic tire having a component comprising a rubber composition, the rubber composition comprising 100 phr of at least one diene-based elastomer and a filler comprising 1 phr to 25 phr of carbon nanotubes having of from 0.25 wt.% to 15 wt.% oxygen content and a measurable amount but at most 10 phr silica particles.

2. The tire of claim 1 wherein the filler comprises 4 to 8 phr of carbon nanotubes, preferably 5 phr to 7 phr or 6 phr of carbon nanotubes.

3. The tire of claim 1 or 2 wherein the filler comprises 1 phr to 5 phr of silica particles.

4. The tire of at least one of the previous claims wherein the rubber composition further comprises 0.1 phr up to 10 phr, preferably 1 phr to 5 phr, of a resin

5. The tire of claim 4 wherein the resin is selected from the group consisting of a modified gum rosin, a heat reactive hydrocarbon resin derived from polymerization of unsaturated constituents of petroleum C9 fraction, a mixture of alkylated naphthenic and aromatic resins, and combinations thereof.

6. The tire of at least one of the previous claims wherein the at least one diene-based elastomer comprises natural rubber and/or aqueous emulsion polymerization prepared styrene/butadiene copolymers (ESBR).

7. The tire of claim 6 wherein a ratio of natural rubber to ESBR is in a range of from 80/20 to 20/80.

8. The tire of at least one of the previous claims wherein the filler further comprises 30 phr to 75 phr of carbon black particles; and/or wherein the filler consists of carbon nanotubes, silica particles, and carbon black particles.

9. The tire of claim 9 wherein a total portion of carbon nanotubes, silica particles, and carbon black particles is at most 110 phr or in a range of from 31 phr to 110 phr, and silica particles are at most 10 phr.

10. The tire of at least one of the previous claims wherein a total portion of the filler is at most 110 phr or is in a range of from 31 phr to 110 phr.

11. The tire of at least one of the previous claims wherein further comprising 1 phr to 10 phr of oil, wherein the oil is preferably selected from the group consisting of aromatic, naphthenic, paraffinic oil, and vegetable oil and combinations thereof.

12. A method of preparing a rubber composition for a pneumatic tire, the method comprising:
mixing a dispersion of carbon nanotubes and oil with at least one diene-based elastomer and a measurable amount but at most 10 phr silica particles.

13. The method of claim 12 further comprising mixing 0.1 phr to 10 phr of a resin into the rubber composition.

14. The method of claim 13 wherein the resin is selected from the group consisting of a modified gum rosin, a heat reactive hydrocarbon resin derived from polymerization of unsaturated constituents of petroleum C9 fraction, a mixture of alkylated naphthenic and aromatic resins, and combinations thereof.

15. The method of claim 12 further comprising mixing 30 phr to 75 carbon black particles into the rubber composition.

## Patentansprüche

1. Luftreifen, der eine Komponente umfasst, die eine Kautschukzusammensetzung umfasst, wobei die Kautschukzusammensetzung 100 ThK mindestens eines auf Dienbasis Elastomers und einen Füllstoff umfasst, der 1 ThK bis 25 ThK Kohlenstoff-Nanoröhrchen mit einem Sauerstoffgehalt von 0,25 Gew.-% bis 15 Gew.-% und eine messbare Menge, aber höchstens 10 ThK Siliciumdioxidteilchen umfasst.

2. Reifen nach Anspruch 1, wobei der Füllstoff 4 bis 8 ThK Kohlenstoff-Nanoröhrchen, vorzugsweise 5 bis 7 ThK oder 6 ThK Kohlenstoff-Nanoröhrchen umfasst.

3. Reifen nach Anspruch 1 oder 2, wobei der Füllstoff 1 ThK bis 5 ThK Siliciumdioxidteilchen umfasst.

4. Reifen nach mindestens einem der vorhergehenden Ansprüche, wobei die Kautschukzusammensetzung ferner 0,1 ThK bis zu 10 ThK, vorzugsweise 1 ThK bis 5 ThK, eines Harzes umfasst.

5. Reifen nach Anspruch 4, wobei das Harz aus der Gruppe ausgewählt ist, die aus einem modifizierten Kolophoniumharz, einem hitzereaktiven Kohlenwasserstoffharz, das aus der Polymerisation von ungesättigten Bestandteilen der C9-Fraktion des Erdöls stammt, einem Gemisch aus alkylierten naphthenischen und aromatischen Harzen und Kombinationen davon besteht.

6. Reifen nach mindestens einem der vorhergehenden Ansprüche, wobei das mindestens eine auf Dienbasis Elastomer Naturkautschuk und/oder durch wässrige Emulsionspolymerisation hergestellte Styrol/Butadien-Copolymere (ESBR) umfasst.

7. Reifen nach Anspruch 6, wobei ein Verhältnis von Naturkautschuk zu ESBR in einem Bereich von 80/20 bis 20/80 liegt.

8. Reifen nach mindestens einem der vorhergehenden Ansprüche, wobei der Füllstoff ferner 30 phr bis 75 phr Rußpartikel umfasst; und/oder wobei der Füllstoff aus Kohlenstoff-Nanoröhrchen, Siliziumdioxidpartikeln und Rußpartikeln besteht.

9. Reifen nach Anspruch 9, wobei der Gesamtanteil an Kohlenstoff-Nanoröhrchen, Kieselsäureteilchen und Rußteilchen höchstens 110 ThK beträgt oder in einem Bereich von 31 ThK bis 110 ThK liegt und die Kieselsäureteilchen höchstens 10 ThK betragen.

10. Reifen nach mindestens einem der vorhergehenden Ansprüche, wobei der Gesamtanteil des Füllstoffs höchstens 110 phr beträgt oder in einem Bereich von 31 phr bis 110 phr liegt.

11. Reifen nach mindestens einem der vorhergehenden Ansprüche, wobei er ferner 1 phr bis 10 phr Öl enthält, wobei das Öl vorzugsweise aus der Gruppe ausgewählt ist, die aus aromatischem, naphthenischem, paraffinischem Öl und Pflanzenöl und Kombinationen davon besteht.

12. Verfahren zur Herstellung einer Kautschukzusammensetzung für einen Luftreifen, wobei das Verfahren umfasst:
das Mischen einer Dispersion von Kohlenstoff-Nanoröhren und Öl mit mindestens einem auf Dienbasis Elastomer und einer messbaren Menge, jedoch höchstens 10 phr Siliciumdioxidteilchen.

13. Verfahren nach Anspruch 12, das ferner das Einmischen von 0,1 phr bis 10 phr eines Harzes in die Kautschukzusammensetzung umfasst.

14. Verfahren nach Anspruch 13, wobei das Harz aus der Gruppe ausgewählt ist, die aus einem modifizierten Kolophoniumharz, einem hitzereaktiven Kohlenwasserstoffharz, das aus der Polymerisation von ungesättigten Bestandteilen der C9-Fraktion von Erdöl stammt, einem Gemisch aus alkylierten naphthenischen und aromatischen Harzen und Kombinationen davon besteht.

15. Verfahren nach Anspruch 12, das ferner das Einmischen von 30 phr bis 75 Rußpartikeln in die Kautschukzusammensetzung umfasst.

## Revendications

1. Bandage pneumatique possédant un composant comprenant une composition de caoutchouc, la composition de caoutchouc comprenant 100 phr d'au moins un élastomère à base diénique et une matière de charge qui comprend de 1 phr à 25 phr de nanotubes de carbone possédant une teneur en oxygène de 0,25 % en poids à 15 % en poids et une quantité mesurable, mais maximale de 10 phr, de particules de silice.

2. Bandage pneumatique selon la revendication 1, dans lequel la matière de charge comprend de 4 à 8 phr de nanotubes de carbone, de préférence de 5 phr à 7 phr ou 6 phr de nanotubes de carbone.

3. Bandage pneumatique selon la revendication 1 ou 2, dans lequel la matière de charge comprend de 1 phr à 5 phr de particules de silice.

4. Bandage pneumatique selon au moins une des revendications précédentes, dans lequel la composition de caoutchouc comprend en outre de 0,1 phr jusqu'à 10 phr, de préférence de 1 phr à 5 phr, d'une résine.

5. Bandage pneumatique selon la revendication 4, dans lequel la résine est choisie parmi le groupe constitué par une gomme-colophane qui a été modifiée, une résine d'hydrocarbure apte à réagir à la chaleur qui dérive de la polymérisation de constituants insaturés d'une fraction C9 de pétrole, un mélange de résines naphténiques et aromatiques alkylées, ainsi que leurs combinaisons.

6. Bandage pneumatique selon au moins une des revendications précédentes, dans lequel ledit au moins un élastomère à base diénique comprend du caoutchouc naturel et/ou des copolymères de styrène/butadiène qui ont été préparés par l'intermédiaire d'une polymérisation en émulsion aqueuse (ESBR).

7. Bandage pneumatique selon la revendication 6, dans lequel un rapport du caoutchouc naturel au ESBR se situe dans une plage allant de 80/20 à 20/80.

8. Bandage pneumatique selon au moins une des revendications précédentes, dans lequel la matière de charge comprend en outre de 30 phr à 75 phr de particules de noir de carbone ; et/ou dans lequel la matière de charge est constituée par des nanotubes de carbone, des particules de silice et des particules de noir de carbone.

9. Bandage pneumatique selon la revendication 8, dans lequel une portion totale de nanotubes de carbone, de particules silice et de particules de noir de carbone représente au maximum 110 phr ou se situe dans une plage allant de 31 phr à 110 phr, et les particules de silice représentent au maximum 10 phr.

10. Bandage pneumatique selon au moins une des revendications précédentes, dans lequel une portion totale de la matière de charge représente au maximum 110 phr ou se situe dans une plage allemande 31 phr à 110 phr.

11. Bandage pneumatique selon au moins une des revendications précédentes, qui comprend en outre de 1 phr à 10 phr d'une huile ; dans lequel l'huile est de préférence choisie parmi le groupe constitué par une huile aromatique, une huile naphténique, une huile paraffinique et une huile végétale ainsi que leurs combinaisons.

12. Procédé de préparation d'une composition de caoutchouc pour un bandage pneumatique, le procédé comprenant le fait de :
mélanger une dispersion de nanotubes de carbone et une huile avec au moins un élastomère à base diénique et une quantité mesurable, mais maximale de 10 phr de particules de silice.

13. Procédé selon la revendication 12, qui comprend en outre le fait d'ajouter par mélange de 0,1 phr à 10 phr d'une résine à la composition de caoutchouc.

14. Procédé selon la revendication 13, dans lequel la résine est choisie parmi le groupe constitué par une gomme-colophane qui a été modifiée, une résine d'hydrocarbure apte à réagir à la chaleur qui dérive de la polymérisation de constituants insaturés d'une fraction C9 de pétrole, un mélange de résines naphténiques et aromatiques alkylées, ainsi que leurs combinaisons.

15. Procédé selon la revendication 12, qui comprend en outre le fait d'ajouter par mélange de 30 phr à 75 phr de particules de noir de carbone à la composition de caoutchouc.
